## Europäisches Patentamt
## European Patent Office
## Office européen des brevets

(11) Numéro de publication: **0 027 076**
**A1**

# (12) DEMANDE DE BREVET EUROPEEN

(21) Numéro de dépôt: **80401378.7**

(22) Date de dépôt: **30.09.80**

(51) Int. Cl.³: **H 01 M 4/50,** H 01 M 6/16, C 01 G 45/02

(30) Priorité: **02.10.79 FR 7924482**

(43) Date de publication de la demande: **15.04.81 Bulletin 81/15**

(84) Etats contractants désignés: **AT BE CH DE GB IT LI LU NL SE**

(71) Demandeur: **CELSA COMPOSANTS ELECTRIQUES SA, F-86420 Monts Sur Guesnes (FR)**

(72) Inventeur: **Gerbier, Gérard, 9, avenue du Parc Biard, F-86000 Poitiers (FR)**

(74) Mandataire: **Derambure, Christian, BUGNION ASSOCIES SARL 116, boulevard Haussmann, F-75008 Paris (FR)**

(54) Pile lithium - bioxyde de manganèse et procédé de réalisation d'une telle pile.

(57) Une pile lithium-bioxyde de manganèse, destinée notamment à un stimulateur cardiaque, comportant au moins une anode en lithium (4), une cathode en bioxyde de manganèse (6), un électrolyte (5). Le matériau cathodique etant du bioxyde de manganèse du type β obtenu par pyrolyse de nitrate de manganèse tétrahydraté.

1

Pile lithium - bioxyde de manganèse et procédé de réalisa- tion d'une telle pile.

L'invention concerne une pile lithium - bioxyde de manganèse comportant au moins une anode en lithium, une cathode en bioxyde de manganèse et un électrolyte ; et un procédé de réalisation d'une telle pile, utilisable notamment dans un stimulateur cardiaque.

On connaît déjà des piles lithium - bioxyde de manganèse dans lesquelles le bioxyde de manganèse est de variétés $\beta - \gamma$ (variété intermédiaire entre les deux phases pures $\beta$ et $\gamma$), ou " $\beta$ naturel" (pyrolusite), ou $\beta$ obtenu par chauffage de la variété $\gamma$. Mais, l'expérience a montré que l'emploi de la variété $\gamma$ présente de nombreux in- convénients pour la réalisation et l'utilisation de la pile : La présence de la variété $\gamma$ rend la variété $\beta, - \gamma$ fortement hygroscopique ce qui est gênant pour une pile (alors que normalement cette variété a l'avantage de contenir peu d'eau). La variété $\beta - \gamma$ n'a pas la masse spécifique ou la densité maximale possible (comparée à celle de la variété $\beta$ obtenue par pyrolyse du nitrate de manganèse tétrahydraté, entre 120 et 200° C environ) et donc l'énergie spécifique ou capacité faradique, énergie électrique disponible par unité de masse d'une pile comportant cette variété $\beta - \gamma$ n'est pas maxi- male. La variété $\beta - \gamma$ n'a pas une composition stoechiométrique (elle est déficitaire en oxygène) et l'énergie spécifique d'une pile comportant cette variété est inférieure à celle de toute pile à variété stoechiométrique.
La tension du courant électrique de décharge entre les
deux bornes cathode et anode des piles lithium à variétés
β — γ ou " β naturel" (pyrolusite) ou β obtenu par chauffage de γ décroît en permanence ce qui est très gênant
par exemple pour un stimulateur cardiaque. La durée de vie
de telles piles est réduite.

On connaît aussi des piles ayant une anode en lithium et
une cathode consistant en grains de bioxyde de manganèse
produits par décomposition thermique, jusqu'à 500° C, de
nitrate de manganèse. Ces grains subissent un traitement
thermique ultérieur entre 500° C et 600° C afin de former
à leur surface des couches de sesquioxyde de manganèse.
On connaît enfin un procédé de préparation d'une cathode
en bioxyde de manganèse, dans lequel on ajoute et on
mélange de la poudre de bioxyde de manganèse à une solution aqueuse de nitrate de manganèse, et on effectue un
traitement thermique jusqu'à 500° C. Cependant, ces piles
présentent également de nombreux inconvénients : L'énergie
spécifique disponible n'est pas maximale. La teneur en
oxygène actif (ou degré d'oxydation du manganèse) n'est pas
maximale (du fait du siesquioxyde de manganèse, déficiaire en oxygène résultant notamment du traitement thermique
à 500° C provoquant une perte en oxygène)..

La présente invention a pour but de remédier à ces inconvénients en proposant une pile lithium bioxyde de manganèse, dont le matériau cathodique est exclusivement du
bioxyde de manganèse du type β obtenu par pyrolyse de
nitrate de manganèse tétrahydraté.

Le matériau cathodique est préparé par pyrolyse du nitrate
de manganèse tétrahydraté entre environ 120° C et 200° C, lavé puis séché entre environ 400 et 450° C. Le matériau cathodique a une teneur en oxygène actif et un degré d'oxydation du manganèse maximaux. Egalement le matériau cathodique a une densité (poudre tassée) maximale, comprise entre 3 et 3,5, préférentiellement de l'ordre de 3,3.

Les avantages obtenus grâce à l'invention sont essentiellement que l'énergie spécifique en capacité faradique est maximale car la masse spécifique de cette variété est très largement supérieure à celle des autres variétés ; et la composition de cette variété est stoechiométrique. Le procédé de réalisation d'une pile suivant l'invention est plus facile car la variété employée est exempte d'eau de constitution et totalement non hygroscopique. Une telle pile est plus fiable. Sa tension électrique de décharge est quasiment constante ce qui est avantageux pour certaines applications notamment les stimulateurs cardiaques surtout s'il est combiné, comme c'est le cas, avec une durée de vie plus longue.

Ces avantages apparaissent dans le tableau ci-après donnant pour différentes variétés de bioxyde de manganèse la densité d'une poudre de cette variété à l'état tassé : La densité de la variété utilisée dans l'invention est comprise entre 3 et 3,5, préférentiellement est de l'ordre de 3,3 donc largement supérieure aux densités des autres variétés soit comprises entre 2,5 et 1,7.

4

| Type ou variété de bioxyde de manganèse | Densité du type ou variété de bioxyde de manganèse (poudre tassée) |
|---|---|
| β — γ | 2,4 |
| β Naturel (pyrolusite) | 1,7 |
| β obtenu par chauffage de γ | 2,5 |
| β obtenu par pyrolyse du nitrate de manganèse, utilisée dans l'invention | Entre 3 et 3,5 préférentiellement 3,3 environ. |

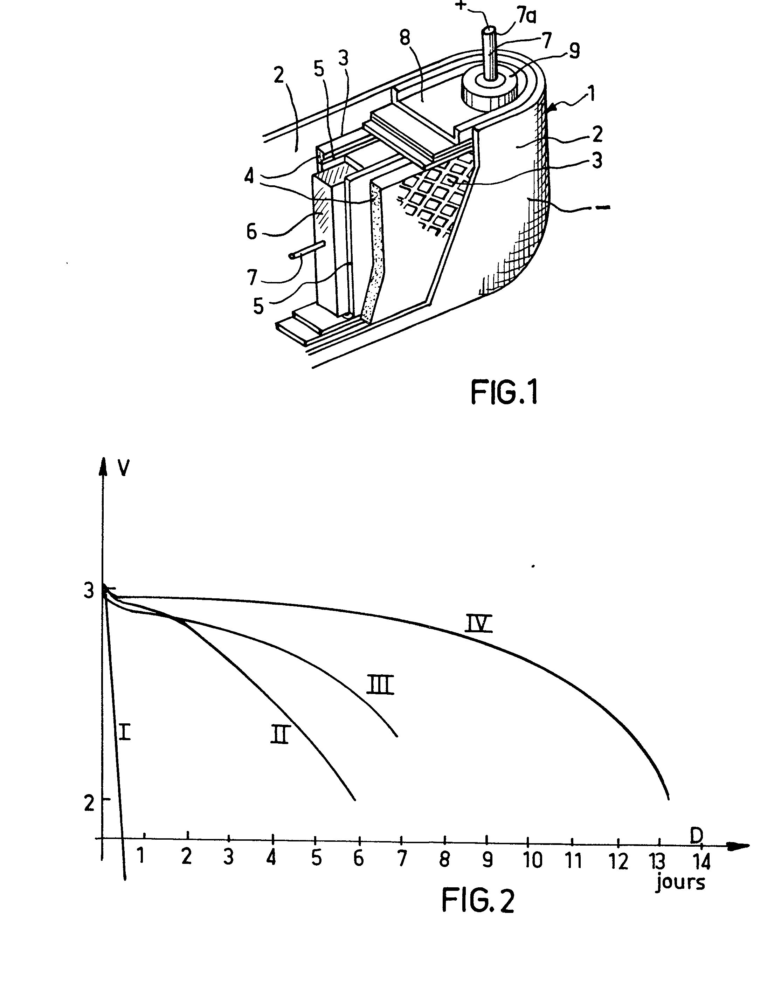

Ces avantages résultent également de la figure 2 illustrant les courbes de décharge de différentes piles lithium-bioxyde de manganèse pour différentes variétés de bioxyde de manganèse soit la variété β — γ (courbe N° III), la variété β naturelle (courbe N° 1), la variété β obtenue par chauffage de la variété γ (courbe N° II) et la variété β obtenue par pyrolyse du nitrate de manganèse utilisée dans l'invention (courbe N° IV). Ces courbes de décharge sont établies à 60° C et avec une résistance de décharge de 500 Ohm. Sont portées en abscisse la durée en jours et en ordonnées la tension de décharge en volts. Si on considère qu'une pile est normalement utilisable pour les applications spécifiques considérées (stimulateurs cardiaques), si la tension de décharge est au moins égale à 2 volts, il est clair que la pile selon l'invention a une autonomie supérieure et une stabilité plus importante que celles des piles d'autres variétés.

Dans ce qui suit, l'invention est exposée plus en détail à l'aide des dessins explicatifs.

> La figure 1 est une vue en perspective, partiellement arrachée, d'une pile suivant l'invention. La figure 2 est un graphique de décharge de piles notamment de la tension V de décharge (en volts) en fonction de la durée D (en jours), respectivement pour la pile suivant l'invention (courbe IV) et d'autres piles de l'état connu de la technique (courbe I, II, III).

La pile selon l'invention est une pile lithium-bioxyde de manganèse, dans laquelle, de façon caractéristique, le bioxyde de manganèse est exclusivement de type $\beta$ , obtenu par pyrolyse de nitrate de manganèse, tetrahydraté, dans les conditions expliquées ultérieurement.

L'invention concerne également l'application nouvelle et inventive du bioxyde de manganèse ainsi obtenu en tant que matériau exclusif constituant la cathode d'une pile ayant une anode en lithium et un électrolyte.

Le procédé de préparation du bioxyde de manganèse utilisé, met en oeuvre du nitrate de manganèse tétrahydraté. Celui-ci est chauffé dans un bain de sable. Le sel fond d'abord dans son eau de cristallisation. Il se décompose ensuite avec formation et dégagement de peroxyde d'azote et précipitation, dans la solution, du bioxyde de manganèse. La température de chauffage est comprise entre environ 100° C et 300°C. Préférentiellement la température est comprise entre environ 120° et 200° C. D'excellents résultats ont été obtenus à une température égale ou voisine de 150° C. Le chauffage est poursuivi jusqu'à ce que le produit soit sec et qu'aucune vapeur rousse de peroxyde d'azote se dégage. Aucun autre produit n'est ajouté avant ou pendant cette première phase de chauffage. Dans une deuxième phase ultérieure, le bioxyde de manganèse ainsi obtenu est lavé notamment à l'eau distillée chaude et avec de l'eau ammoniacale à 1 % environ.

Dans une troisième phase suivante, le bioxyde de manganèse est séché et chauffé à l'étuve à une température de l'ordre de 400° C à 450° C maximal, de préférence entre environ 400° C et 420° C.

Les deux dernières phases (lavage et chauffage) visent à éliminer toute impureté nitré, pouvant nuire à la conservation de la pile.

Le procédé ainsi décrit ne comporte aucune phase susceptible d'abaisser la teneur en oxygène actif du bioxyde de manganèse, qui est maximale. En particulier, le procédé ne comporte pas de phase de chauffage à une température supérieure à 450° C qui provoquerait l'apparition de sesquioxyde de manganèse.

Au cours de procédé, la densité apparente du bioxyde de manganèse et son degré d'oxydation sont contrôlés pour atteindre les maximum maximorum possibles.

Le procédé de réalisation de la pile suivant l'invention comporte la préparation d'une poudre de bioxyde de manganèse comme indiqué plus haut. Cette poudre est ensuite mélangée à une poudre conductrice de l'électricité telle que du graphite ou carbon black, en proportion de 1 à 10% environ, de préférence de l'ordre de 4% environ.

On ajoute également et on mélange un liant sous forme de poudre tel du téflon ou de la diméthyl cellulose, du polyéthylène, du polypropylène ou toute autre matière plastique appropriée. Ce mélange une fois réalisé de façon intime est comprimé sur un collecteur de courant électrique rigide métallique notamment inoxydable.

On place cet ensemble dans un séparateur micro-poreux en forme de réceptacle, notamment en cellulose ou fibre de verre ou en polypropylène non tissé, susceptible d'emmagasiner un électrolyte tel qu'une solution de perchlorate de lithium dans du carbonate de propylène.

Une pile 1 suivant l'invention peut prendre la forme d'exécution de la figure 1. Elle comprend un boîtier 2 métallique, conducteur de l'électricité, constituant le pôle négatif de la pile, à l'intérieur duquel sont placées, de l'extérieur vers l'intérieur et de façon symétrique par rapport à un plan de symétrie principal du boîtier 2, deux grilles 3, métalliques conductrices de l'électricité, réunies l'une à l'autre par leurs parties inférieures dans le fond du boîtier 2 où elles sont associées rigidement (par exemple par soudage) et en contact électrique avec celui-ci. Deux anodes en lithium 4 incrustées sur les grilles 3 et entre lesquelles est logé tout en étant adjacent un séparateur 5 micro-poreux formant réceptacle tel que décrit plus haut, dans lequel est placé en étant adjacent la cathode 6 exclusivement en bioxyde de manganèse selon le procédé décrit plus haut qui comporte un collecteur cathodique 7 dont une partie extrême libre 7 a ou pôle positif de la pile émerge vers l'extérieur et traverse un couvercle 8 fermant l'ouverture du boîtier 2 à l'endroit d'un organe d'isolation 9. L'électrolyte mentionné plus haut est placé dans la pile avant sa fermeture étanche.

REVENDICATIONS DE BREVET

1. Pile lithium - bioxyde de manganèse, destinée notamment à un stimulateur cardiaque, comportant au moins une anode en lithium, une cathode en bioxyde de manganèse, un électrolyte, caractérisée par le fait que le matériau cathodique est exclusivement du bioxyde de manganèse du type β obtenu par pyrolyse de nitrate de manganèse tétrahydraté.

2. Pile selon 1, caractérisée par le fait que le matériau cathodique est préparé par pyrolyse au nitrate de manganèse tétrahydraté entre environ 120° C et 200° C, lavé et séché entre environ 400° C et 450° C.

3. Pile selon 1 et 2, caractérisée par le fait que le matériau cathodique a une teneur en oxygène actif et un degré d'oxydation du manganèse maximaux.

4. Pile selon 1 à 3, caractérisée par le fait que le matériau cathodique a une densité (poudre tassée) comprise entre 3 et 3,5, préférentiellement de l'ordre de 3,3.

5. Pile selon 1 à 4, caractérisée par le fait qu'elle comporte un boîtier (2), métallique, conducteur de l'électricité, pôle négatif, au moins une grille (3) en contact électrique avec le boîtier (2), sur laquelle est incrustée une anode en lithium (4), au moins un séparateur (5) micro-poreux adjacent à la cathode (6) en bioxyde de manganèse à laquelle est associé un collecteur cathodique (7) conducteur de l'électricité dont une partie extrême (7 a), pôle positif, saille d'un couvercle (8) à travers un organe d'isolation (9), un électrolyte étant emmagasiné dans le séparateur (5).

6. Pile selon 1 à 5, caractérisée par le fait que la grille (3) constitue un réceptacle associé rigidement au fond du boîtier (2).

7. Pile selon 1 à 6, caractérisée par le fait que le séparateur (5) constitue un réceptacle dans lequel se trouve placée la cathode (6) garnie de son collecteur cathodique (7).

8. Procédé de réalisation d'une pile lithium-bioxyde de manganèse selon 1 à 7, caractérisé par le fait qu'on prépare une poudre de bioxyde de manganèse de variété β par pyrolyse du nitrate de manganèse, on mélange intimement cette poudre avec une poudre conductrice de l'électricité et éventuellement avec un liant en poudre ; on comprime ce mélange sur un collecteur de courant électrique, on place cet ensemble ainsi obtenu dans un séparateur micro-poreux.

9. Procédé selon 8, caractérisé par le fait que pour préparer la poudre de bioxyde de manganèse, on part de nitrate de manganèse tétrahydraté, on chauffe celui-ci entre environ 100° C et 300° C, préférentiellement entre 120° C et 200° C ; on lave la poudre ainsi obtenue ; on chauffe cette poudre à une température de l'ordre de 400° à 450° C, préférentiellement entre 400° C et 420° C.

10. Procédé selon 8 et 9, caractérisé par le fait qu'on élimine toute impureté nitré, on n'effectue aucune phase susceptible d'abaisser la teneur en oxygène actif du bioxyde de manganèse notamment on ne procède à aucun chauffage à une température supérieure à 450° C.

0027076

— 1/1 —

FIG.1

FIG.2

## DOCUMENTS CONSIDERES COMME PERTINENTS

| Catégorie | Citation du document avec indication, en cas de besoin, des parties pertinentes | Revendication concernée |
|---|---|---|
| | CHEMICAL ABSTRACTS, vol. 89, 1978 page 165, abrégé 62459c Columbus, Ohio, US<br>& JP - A - 77 147 732 (YUASA BATTERY CO. LTD)(08-12-1977)<br>* Abrégé * | 1 |
| | FR - A - 2 119 372 (BRENET JEAN & RUCH)<br>* Revendications 1,4,6; page 10, lignes 24-26 * | 1 |
| | TRANS. FARADAY SOC. 58, 1975-88 (1962)<br>A.K. COVINGTON et al.: "Standard Potential of the$\beta$ Manganese Dioxide Electrode"<br>* Page 1977, paragraphes 2,3 * | 2 |
| | DE - A - 2 454 012 (RHEINISCH-WESTFÄLISCHES ELEKTRIZITÄTSWERK)<br>* Exemples 1,2,3; page 1, paragraphe 1 * | 2 |
| A | FR - A - 443 523 (EVER. READY ME-TALLINDUSTRIE GESELLSCH.)<br>* Page 1, lignes 6-21 * | |
| A | GMELINS: "Handbuch der anorganischen Chemie System no. 56:Mangan. Partie C (1973) | 2 |

./.

Le présent rapport de recherche a été établi pour toutes les revendications

### CLASSEMENT DE LA DEMANDE (Int. Cl. 3)

H 01 M   4/50
            6/16
C 01 G 45/02

### DOMAINES TECHNIQUES RECHERCHES (Int. Cl. 3)

H 01 M   4/50
            6/16
C 01 G 45/02

### CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

| Lieu de la recherche | Date d'achèvement de la recherche | Examinateur |
|---|---|---|
| La Haye | 16-01-1981 | D'HONDT |

OEB Form 1503.1   06.78

## EINSCHLÄGIGE DOKUMENTE

| Kategorie | Kennzeichnung des Dokuments mit Angabe, soweit erforderlich, der Maßgeblichen Teile | betrifft Anspruch |
|---|---|---|
| | Verlag Chemie Weinheim DE<br><br>* Page 142, châpitre 2.6.2.7; premières lignes *<br><br>-- | |
| A | FR - A - 2 326 050 (ELEANOR & WILSON GREAT BATCH. FOUNDATION)<br><br>* Figures 1,2,3; page 2, ligne 29; page 5, ligne 30 *<br><br>-- | 2 |
| A | FR - A - 2 342 561 (E.I. DU PONT DE NEMOURS AND COMP.)<br><br>* Figure 2; page 6, ligne 17 - page 8, ligne 10 *<br><br>-- | 5 |
| A | JOURNAL OF ELECTROCHEMICAL SOC., vol. 121, no. 5, mei 1974 F.W. DAMPIER: "The cathodic behavior of CuS, $MoO_3$ and $MnO_2$ in lithium cells", pages 656-660<br><br>* Page 657, colonne de gauche, paragraphes 4-5 *<br><br>-- | 7 |
| A | US - A - 4 142 028 (U.Z. LEGER et al.)<br><br>* Revendication 1, colonne 3, lignes 30-35 *<br><br>-- | 1 |
| A | CHEMICAL ABSTRACTS, vol. 88, no. 16, 17 avril 1978, page 149 abrégé 107896r Columbus, Ohio, US<br><br>./. | 1 |

KLASSIFIKATION DER ANMELDUNG (Int. Cl.3)

RECHERCHIERTE SACHGEBIETE (Int. Cl.3)

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| | & JP - A - 77 125 722 (HITACHI MAXELL LTD)( 21-10-1977) <br><br> * Abrégé * <br><br> -- | | |
| A | CHEMICAL ABSTRACTS, vol. 92, 2 janvier 1980, page 140, abrégé 8887q Columbus, Ohio, US <br><br> & JP - A - 79 111 633 (SANYO ELECTRIC CO. LTD)(01-09-1979) <br><br> * Abrégé * <br><br> -- | | |
| P | DE - A - 2 951 520 (GTE LABORA-TORIES) <br><br> * Figure 5, page 8, dernier paragraphe - page 9, paragraphe 1 * <br><br> & FR - A - 2 445 628 <br><br> ---- | | DOMAINES TECHNIQUES RECHERCHES (Int. Cl. ³) |